# EUROPEAN PATENT APPLICATION

(11) **EP 2 874 384 A1**
(43) Date of publication of application: **20.05.2015**
(21) Application number: 14189278.6
(22) Date of filing: 16.10.2014
(51) Int. Cl.: H04M 3/42, H04M 3/20, H04H 20/10

(54) **System and method for minimizing active speech disruptions and assuring task level continuity on a flight deck**

(30) Priority: 18.11.2013 US 201314082952
(71) Applicant: Honeywell International Inc., Morristown, NJ 07962-2245 (US)
(72) Inventor: Kawalkar, Amit Nishikant, Morristown, NJ New Jersey 07962-2245 (US)
(74) Representative: Houghton, Mark Phillip

(57) **Abstract**

A flight deck communication system comprises a speech engine for receiving a pilot's speech input and an aural annunciation manager. A smart pilot is coupled to the speech engine and to the aural annunciation manager and configured to (a) generate new aural message annunciation requests,(b) determine if the pilot is engaged in an active speech input task, (c) deferring annunciation if the message is not a high priority message, (d) annunciate the deferred message when the active speech input task is completed, (e) annunciate the received message substantially immediately if the message is a high priority message, and (f) store the progress of the active task.

## Description

### TECHNICAL FIELD

Embodiments of the subject matter described herein relate generally to avionics systems and, more particularly, to a flight deck communication system and method that minimizes aural noise by managing the delivery of aural messages based on message content and pilot active task profile and enables a pilot to switch between switch input related tasks without loss of task continuity.

### BACKGROUND

In the flight deck of the future, both the user and system interact with each other through natural and fairly standardized speech. In the cockpit environment, this may take the form of a single brief command such as "OK, DIRECT TO XYZ". However, to accommodate long dialogs such as pilot takeoff and landing briefings, pilot-controller communications, FMS (Flight Management System) initialization scripts, and the like, in an airborne FD-X context, improvements in overall interactional and operational efficiency are required, especially as they relate to coping with external noise and speech input task discontinuities resulting from external disturbances such as ATC messages, safety warnings, and the like. This is especially true in the case of irregular noise which is technically difficult to suppress.

In the cockpit, aural warnings, messages, and feedback issued by, for example, EGPWS (Enhanced Ground Proximity Warning System), and the like, may be considered aural noise. It is in the same frequency spectrum as that of the pilot's speech input commands. Such aural annunciations may not only disrupt a co-pilots callouts, but also introduce additional aural messages that convey system intentions, feedback, recommendations, and alerts, thus increasing the density of irregular aural noise on the flight deck. This further degrades the process of speech recognition in various applications such as cockpit control language and other conversational speech based applications. In addition, even if the messages are played with minimal aural disturbance to the existing speech input task, it is possible that the pilot would mentally register them, reducing aural message throughput and invalidating them regardless of their priority and/or criticality.

If a pilot were actively engaged in a long speech input task, and a high priority aural message is annunciated corresponding, for example, to an emergency situation, the pilot would likely spring into action to respond to the situation. This would abruptly end the process associated with the speech input task introducing a data discontinuity for the target system and functionality; i.e. a task level discontinuity.

In accordance with the foregoing it would be desirable to provide a reliable and pilot harmonized speech input and speech synthesized interface suitable for use with speech ranging from brief commands to long conversational speech segments on an advanced flight deck.

Other desirable features and characteristics will become apparent from the subsequent detailed description and the appended claims, taken in conjunction with the accompanying drawings and the foregoing technical field and background.

### BRIEF SUMMARY

In accordance with an exemplary embodiment, a flight deck speech and aural interaction method is provided. The method comprises receiving a message for aural annunciation, determining that a pilot is engaged in an active speech input task, and deferring annunciation if the message is not a high priority message.

There is also provided a flight deck speech and aural interaction communication method, comprising receiving a message for aural annunciation, determining if the pilot is engaged in an active speech input task, deferring annunciation if the message is not a high priority message, annunciating the deferred message when the active speech input task is completed. The received message is annunciated substantially immediately if the message is a high priority message and the progress of the active task is stored.

A flight deck display system is also provided comprising a speech engine for receiving a pilot's speech input, an aural annunciation manager, and a smart pilot coupled to the speech engine and to the aural annunciation manager and configured to (a) generate new aural message annunciation requests, (b) determine if the pilot is engaged in an active speech input task, (c) deferring annunciation if the message is not a high priority message, (d) annunciate the deferred message when the active speech input task is completed, (e) annunciate the received message substantially immediately if the message is a high priority message, and (f) store the progress of the active task.

### BRIEF DESCRIPTION OF THE DRAWINGS

A more complete understanding of the subject matter may be derived by referring to the following detailed description and claims when considered in conjunction with the following figures, wherein like reference numbers refer to similar elements throughout the figures: and
FIG. 1 is a block diagram of an embodiment of a flight deck display system including a speech management system;
FIG. 2 is a bock diagram of a speech management system 200 in accordance with an exemplary embodiment;
FIG. 3 is a table illustrating exemplary aural annunciation requests (i.e. EGPWS Mode Cautions and Warnings, a TCAS RA, and a Takeoff Configuration Warning) and their respective Pilot Response Tasks (i.e. respectively, Resolve Warning, Comply RA, and Rectify Configuration);
FIG. 4 is a table illustrating an example of an Aural Message to Pilot Task database.
FIG. 5 is a flow chart that illustrates an exemplary embodiment of a process for minimizing aural noise by managing the delivery of aural messages based on message content and pilot active task profile.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

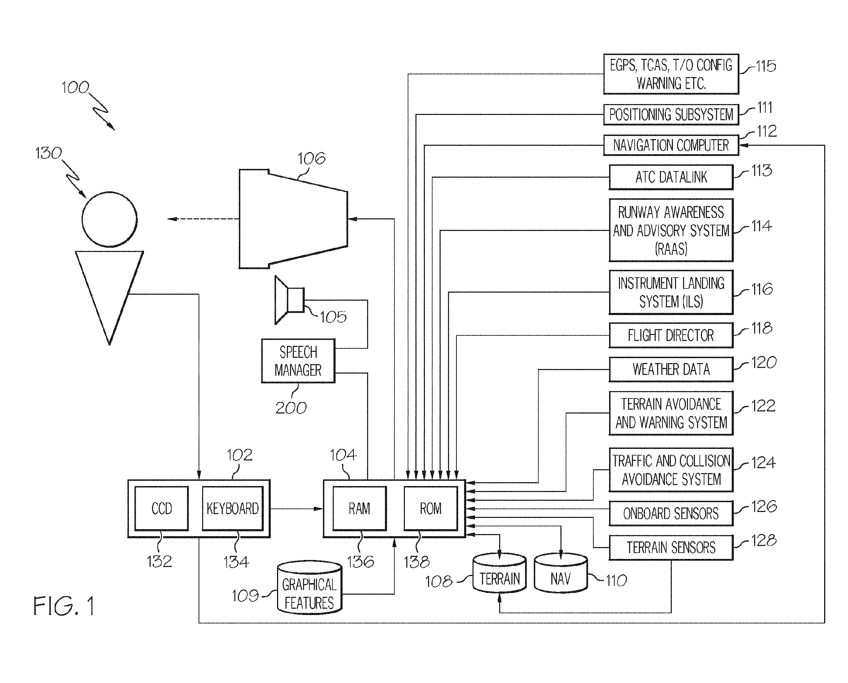

Turning now to the drawings, FIG. 1 depicts an exemplary flight deck control system **100** (suitable for a vehicle such as an aircraft) that generally includes, without limitation: a user interface **102;** a processor architecture **104** coupled to the user interface **102;** an aural annunciator **105;** and a display element **106** coupled to the processor architecture **104.** The system **100** may also include, cooperate with, and/or communicate with a number of databases, sources of data, or the like. Moreover, the system **100** may include, cooperate with, and/or communicate with a number of external subsystems as described in more detail below. For example, the processor architecture **104** may cooperate with one or more of the following components, features, data sources, and subsystems, without limitation: one or more terrain databases **108;** one or more graphical airport feature databases **109;** one or more navigation databases **110;** a positioning subsystem **111;** a navigation computer **112;** an air traffic control (ATC) data link subsystem **113;** a runway awareness and advisory system (RAAS) **114;** an instrument landing system (ILS) **116;** a flight director **118;** a source of weather data **120;** a terrain avoidance and warning system (TAWS) **122;** a traffic and collision avoidance system (TCAS) **124;** one or more onboard sensors **126;** and one or more terrain sensors **128.**

The user interface **102** is in operable communication with the processor architecture **104** and is configured to receive input from a user **130** (e.g., a pilot) and, in response to the user input, supply command signals to the processor architecture **104.** The user interface **102** may be any one, or combination, of various known user interface devices including, but not limited to, a cursor control device (CCD) **132,** such as a mouse, a trackball, or joystick, one or more buttons, switches, or knobs. In the depicted embodiment, the user interface **102** includes the CCD **132** and a keyboard **134.** The user **130** manipulates the CCD **132** to, among other things, move cursor symbols that might be rendered at various times on the display element **106,** and the user **130** may manipulate the keyboard **134** to, among other things, input textual data. As depicted in FIG. 1, the user interface **102** may also be utilized to enable user interaction with the navigation computer **112,** the flight management system, and/or other features and components of the aircraft.

The processor architecture **104** may utilize one or more known general-purpose microprocessors or an application specific processor that operates in response to program instructions. In the depicted embodiment, the processor architecture **104** includes or communicates with onboard RAM (random access memory) **136,** and onboard ROM (read only memory) **138.** The program instructions that control the processor architecture **104** may be stored in either or both the RAM **136** and the ROM **138.** For example, the operating system software may be stored in the ROM **138,** whereas various operating mode software routines and various operational parameters may be stored in the RAM **136.** It will be appreciated that this is merely exemplary of one scheme for storing operating system software and software routines, and that various other storage schemes may be implemented. It will also be appreciated that the processor architecture **104** may be implemented using various other circuits, not just a programmable processor. For example, digital logic circuits and analog signal processing circuits could also be used.

The processor architecture **104** is in operable communication with the terrain database **108,** the graphical airport features database **109,** the navigation database **110,** and the display element **106,** and is coupled to receive various types of data, information, commands, signals, etc., from the various sensors, data sources, instruments, and subsystems described herein. For example, the processor architecture **104** may be suitably configured to obtain and process real-time aircraft status data (e.g., avionics-related data). The aircraft status or flight data may also be utilized to influence the manner in which graphical features (associated with the data maintained in the graphical airport features database **109)** of a location of interest such as an airport are rendered during operation of the aircraft. In practice, the airport feature data can be associated with any viewable portion, aspect, marking, structure, building, geography, and/or landscaping located at, on, in, or near an airport. The processing and rendering of the airport feature data will be described in more detail below.

In certain embodiments, the processor architecture **104** is configured to respond to inertial data obtained by the onboard sensors **126** to selectively retrieve terrain data from the terrain database **108** or the terrain sensor **128,** to selectively retrieve navigation data from the navigation database **110,** and/or to selectively retrieve graphical features data from the graphical features database **109,** where the graphical features data corresponds to the location or target of interest. The processor architecture **104** can also supply appropriate display commands (e.g., image rendering display commands) to the display element **106,** so that the retrieved terrain, navigation, and graphical features data are appropriately displayed on the display element **106.** Processor architecture **104** also provides appropriate commands to aural annunciator **105** (e.g. aural alert generating commands including those related to runway and taxiway alerts). The processor architecture **104** may be further configured to receive real-time (or virtually real-time) airspeed, altitude, attitude, waypoint, and/or geographic position data for the aircraft and, based upon that data, generate image rendering display commands associated with the display of terrain.

The display element **106** is used to display various images and data, in both a graphical and a textual format, and to supply visual feedback to the user **130** in response to the user input commands supplied by the user **130** to the user interface **102.** It will be appreciated that the display element **106** may be any one of numerous known displays suitable for rendering image and/or text data in a format viewable by the user **130.** Non-limiting examples of such displays include various cathode ray tube (CRT) displays, and various flat panel displays such as, various types of LCD (liquid crystal display), OLED, and TFT (thin film transistor) displays. The display element **106** may additionally be based on a panel mounted display, a HUD projection, or any known technology. In an exemplary embodiment, the display element **106** includes a panel display, and the display element **106** is suitably configured to receive image rendering display commands from the processor architecture **104** and, in response thereto, the display element **106** renders a synthetic graphical display having a perspective view corresponding to a flight deck viewpoint. In certain situations, the display element **106** receives appropriate image rendering display commands.

As FIG. 1 shows, the processor architecture **104** is in operable communication with the source of weather data **120,** the TAWS **122,** and the TCAS **124,** and is additionally configured to generate, format, and supply appropriate display commands to the display element **106** so that the avionics data, the weather data **120,** data from the TAWS **122,** data from the TCAS **124,** and data from the previously mentioned external systems may also be selectively rendered in graphical form on the display element **106.** The data from the TCAS **124** can include Automatic Dependent Surveillance Broadcast (ADS-B) messages.

The terrain database **108** includes various types of data, including elevation data, representative of the terrain over which the aircraft is flying. The terrain data can be used to generate a three dimensional perspective view of terrain in a manner that appears conformal to the earth. In other words, the display emulates a realistic view of the terrain from the flight deck or cockpit perspective. The data in the terrain database **108** can be pre-loaded by external data sources or provided in real-time by the terrain sensor **128.** The terrain sensor **128** provides real-time terrain data to the processor architecture **104** and/or the terrain database **108.** In one embodiment, terrain data from the terrain sensor **128** is used to populate all or part of the terrain database **108,** while in another embodiment, the terrain sensor **128** provides information directly, or through components other than the terrain database **108,** to the processor architecture **104.**

The terrain sensor **128** can include visible, low-light TV, infrared, or radar-type sensors that collect and/or process terrain data. For example, the terrain sensor **128** can be a radar sensor that transmits radar pulses and receives reflected echoes, which can be amplified to generate a radar signal. The radar signals can then be processed to generate three-dimensional orthogonal coordinate information having a horizontal coordinate, vertical coordinate, and depth or elevation coordinate. The coordinate information can be stored in the terrain database **108** or processed for display on the display element **106.**

The terrain data provided to the processor architecture **104** may be a combination of data from the terrain database **108** and the terrain sensor **128.** For example, the processor architecture **104** can be programmed to retrieve certain types of terrain data from the terrain database **108** and other certain types of terrain data from the terrain sensor **128.** In one embodiment, terrain data retrieved from the terrain sensor **128** can include moveable terrain, such as mobile buildings and systems. This type of terrain data is better suited for the terrain sensor **128** to provide the most up-to-date data available. For example, types of information such as water-body information and geopolitical boundaries can be provided by the terrain database **108.** When the terrain sensor **128** detects, for example, a water-body, the existence of such can be confirmed by the terrain database **108** and rendered in a particular color such as blue by the processor architecture **104.**

The navigation database **110** includes various types of navigation-related data stored therein. In preferred embodiments, the navigation database **110** is an onboard database that is carried by the aircraft. The navigation-related data include various flight plan related data such as, for example, and without limitation: waypoint location data for geographical waypoints; distances between waypoints; track between waypoints; data related to different airports; navigational aids; obstructions; special use airspace; political boundaries; communication frequencies; and aircraft approach information. In one embodiment, combinations of navigation-related data and terrain data can be displayed. For example, terrain data gathered by the terrain sensor **128** and/or the terrain database **108** can be displayed with navigation data such as waypoints, airports, etc. from the navigation database **110,** superimposed thereon.

Although the terrain database **108,** the graphical airport features database **109,** and the navigation database **110** are, for clarity and convenience, shown as being stored separate from the processor architecture **104,** all or portions of these databases **108, 109, 110** could be loaded into the onboard RAM **136,** stored in the ROM **138,** or integrally formed as part of the processor architecture **104.** The terrain database **108,** the graphical features database **109,** and the navigation database **110** could also be part of a device or system that is physically separate from the system **100.**

The positioning subsystem **111** is suitably configured to obtain geographic position data for the aircraft. In this regard, the positioning subsystem **111** may be considered to be a source of geographic position data for the aircraft. In practice, the positioning subsystem **111** monitors the current geographic position of the aircraft in real-time, and the real-time geographic position data can be used by one or more other subsystems, processing modules, or equipment on the aircraft (e.g., the navigation computer **112,** the RAAS **114,** the ILS **116,** the flight director **118,** the TAWS **122,** or the TCAS **124).** In certain embodiments, the positioning subsystem **111** is realized using global positioning system (GPS) technologies that are commonly deployed in avionics applications. Thus, the geographic position data obtained by the positioning subsystem **111** may represent the latitude and longitude of the aircraft in an ongoing and continuously updated manner.

The avionics data that is supplied from the onboard sensors **126** includes data representative of the state of the aircraft such as, for example, aircraft speed, altitude, attitude (i.e., pitch and roll), heading, groundspeed, turn rate, etc. In this regard, one or more of the onboard sensors **126** may be considered to be a source of heading data for the aircraft. The onboard sensors **126** can include MEMS-based, ADHRS-related or any other type of inertial sensor. As understood by those familiar with avionics instruments, the aircraft status data is preferably updated in a continuous and ongoing manner.

The weather data **120** supplied to the processor architecture **104** is representative of at least the location and type of various weather cells. The data supplied from the TCAS **124** includes data representative of other aircraft in the vicinity, which may include, for example, speed, direction, altitude, and altitude trend. In certain embodiments, the processor architecture **104,** in response to the TCAS data, supplies appropriate display commands to the display element **106** such that a graphic representation of each aircraft in the vicinity is displayed on the display element **106.** The TAWS **122** supplies data representative of the location of terrain that may be a threat to the aircraft. The processor architecture **104,** in response to the TAWS data, preferably supplies appropriate display commands to the display element **106** such that the potential threat terrain is displayed in various colors depending on the level of threat. For example, red is used for warnings (immediate danger), yellow is used for cautions (possible danger), and green is used for terrain that is not a threat. It will be appreciated that these colors and number of threat levels are merely exemplary, and that other colors and different numbers of threat levels can be provided as a matter of choice.

As previously alluded to, one or more other external systems (or subsystems) may also provide avionics-related data to the processor architecture **104** for display on the display element **106.** In the depicted embodiment, these external systems include a flight director **118,** an instrument landing system (ILS) **116,** runway awareness and advisory system (RAAS) **114,** and navigation computer **112.** The flight director **118,** as is generally known, supplies command data representative of commands for piloting the aircraft in response to flight crew entered data, or various inertial and avionics data received from external systems. The command data supplied by the flight director **118** may be supplied to the processor architecture **104** and displayed on the display element **106** for use by the user **130,** or the data may be supplied to an autopilot (not illustrated). The autopilot, in turn, produces appropriate control signals that cause the aircraft to fly in accordance with the flight crew entered data, or the inertial and avionics data.

The ILS **116** is a radio navigation system that provides the aircraft with horizontal and vertical guidance just before and during landing and, at certain fixed points, indicates the distance to the reference point of landing. The system includes ground-based transmitters (not shown) that transmit radio frequency signals. The ILS **116** onboard the aircraft receives these signals and supplies appropriate data to the processor for display.

The RAAS **114** provides improved situational awareness to help lower the probability of runway incursions by providing timely aural advisories to the flight crew during taxi, takeoff, final approach, landing and rollout. The RAAS **114** uses GPS data to determine aircraft position and compares aircraft position to airport location data stored in the navigation database **110** and/or in the graphical features database **109.** Based on these comparisons, the RAAS **114,** if necessary, issues appropriate aural advisories. Aural advisories, which may be issued by the RAAS **114,** inform the user **130,** among other things of when the aircraft is approaching a runway, either on the ground or from the air at times such as when the aircraft has entered and is aligned with a runway, when the runway is not long enough for the particular aircraft, the distance remaining to the end of the runway as the aircraft is landing or during a rejected takeoff, when the user **130** inadvertently begins to take off from a taxiway, and when an aircraft has been immobile on a runway for an extended time. During approach, data from sources such as GPS, including RNP and RNAV, can also be considered.

The navigation computer **112** is used, among other things, to allow the user **130** to program a flight plan from one destination to another. The navigation computer **112** may be in operable communication with the flight director **118.** As was mentioned above, the flight director **118** may be used to automatically fly, or assist the user **130** in flying, the programmed route. The navigation computer **112** is in operable communication with various databases including, for example, the terrain database **108** and the navigation database **110.** The processor architecture **104** may receive the programmed flight plan data from the navigation computer **112** and cause the programmed flight plan, or at least portions thereof, to be displayed on the display element **106.**

The ATC datalink subsystem **113** is utilized to provide air traffic control data and instructions to the system **100,** preferably in compliance with known standards and specifications. Using the ATC datalink subsystem **113,** the processor architecture **104** can receive air traffic control data from ground based air traffic controller stations and equipment. In turn, the system **100** can utilize such air traffic control data as needed.

In operation, a flight deck display system as described herein is suitably configured to process the current real-time geographic position data, the current real-time heading data, the airport feature data, and possibly other data to generate image rendering display commands for the display element **106.**

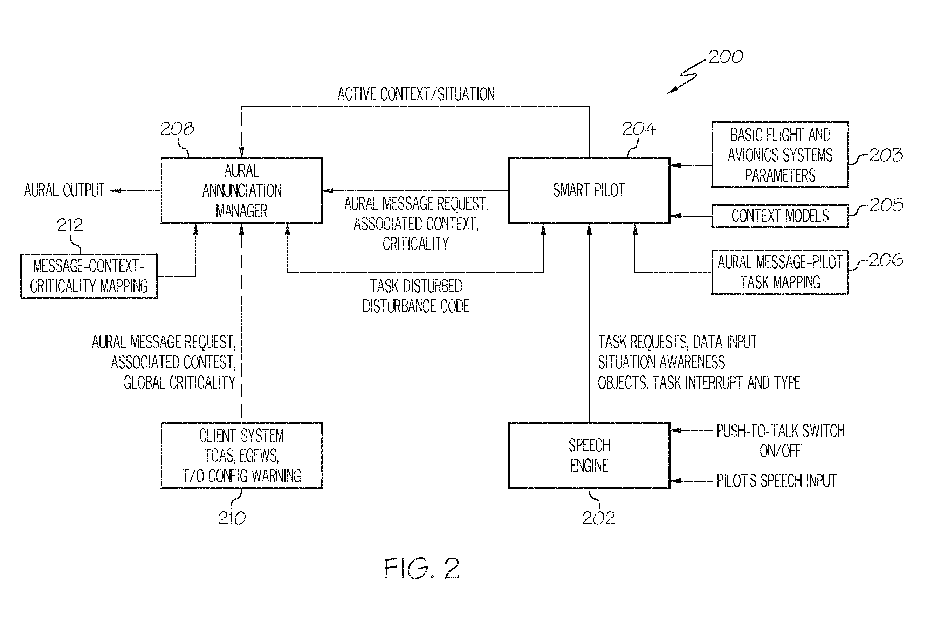

In accordance with an exemplary embodiment, a speech management unit **200** (described in more detail hereinbelow in connection with FIG 2) is coupled between processor **104** and aural annunciator **105.** Speech manager **200** minimizes aural noise by appropriately managing the delivery of long and short aural messages based on the context of the message and the pilot's active task profile. It recognizes if a higher priority warning is activated while the pilot is performing a speech input task and places a virtual or logical bookmark in the pilot initiated current speech input task. When the pilot's handling of the higher priority active task is over, it reminds the pilot of the unfinished (i.e. bookmarked) speech input task. Task checkpoints that help the pilot recall the incomplete task may be generated and/or presented aurally and/or visually. The pilot may continue with the unfinished task or defer it further until he retains cognitive bandwidth. The pilot may also cancel the disturbed speech input task and start anew. If the pilot is performing a speech input task (e.g. a pilot verbally inputting flight management system initialization parameters, interrogating systems regarding the traffic situation down-path, engaging in a briefing on various phases of flight like takeoff, climb, approach, landing, etc., and the like.) and a scheduled aural message (e.g. a pilot's scheduled communication regarding a predicted situation, user interaction feedback, a response to a pilot's situational awareness requirements, etc., over an aural channel) is not of a high priority, the scheduled aural message is deferred for annunciation. When the pilot completes the speech input task, the deferred message is played back only if it is valid over the current context for the pilot to know. If not, it may be logged in a system message log for the pilot and/or maintenance personnel to review at a later time. Thus, the occurrence of aural noise is reduced by appropriately managing the annunciation deliveries based on current context, pilot's active task requirements, and message criticality. This also ensures that the pilot's long speech input tasks do not loose continuity and assists the pilot to resume such tasks if interrupted due to a higher priority system message and associated response activities.

FIG. 2 is a bock diagram of speech management system **200** shown in FIG. 1 in accordance with an exemplary embodiment. A speech engine **202** monitors at a first input thereof an indication of the pilot's intention to provide a speech input and receives the speech at a second input thereof. That is, a task interruption signal is generated when a switch, such as a push-to-talk switch, is activated for any speech input, long or short. Speech engine **202** processes a pilot's aural commands and identifies it as a task request or task interrupts. It also processes long aural commands like takeoff briefings, etc., and creates situation awareness objects. Task requests, data, and situation awareness signals are provided by speech engine **202** to a first input of smart pilot **204.**

Smart pilot **204** is a rationally thinking, cognitive system capable of providing mission and task support to pilots in an advanced flight deck context. It is an intelligent first officer system that model's a first officer's roles and responsibilities and provides advisories to the pilot regarding prevailing and future flight situations, performs flight operation procedures automatically as well as in collaboration with the pilot, monitors critical flight parameters and pilot actions to improve overall flight safety, and provides critical situation awareness facts to the pilot either on demand or based on the situation. Smart pilot **204** may comprise a system and method for prioritizing incoming datalink messages. When a datalink message is received in an aircraft, it is parsed into individual information elements. The relevance of the received datalink message is then assessed from the individual information elements. The received datalink message is then categorized into one of a plurality of playback priority categories, based on the assessed relevance of the received datalink message. Such a system and method are shown and described in United States Patent Application Serial Number 13/007,178 filed January 14, 2011, and entitled DATALINK MESSAGE PRIORITIZATION SYSTEM AND METHOD, the teachings of which are hereby incorporated by reference.

Smart pilot **204** may also comprise a system and method for facilitating workload management. The system processes first sensor data to estimate the current cognitive state of a first person, and processes second sensor data to estimate the current cognitive state of a second person. Information representative of the estimates of the current cognitive states of the first person and the second person is simultaneously rendered on a display device. Such a system and method are shown and described in United States Patent Application Serial Number 13/173,760 filed June 30, 2011, and entitled WORLLOAD MANAGEMENT SYSTEM AND METHOD, the teachings of which are hereby incorporated by reference.

A system and method for improving pilot situational awareness may also be included in smart pilot **204.** When datalink messages and/or automatic dependent surveillance-broadcast (ADS-B) data and/or various other data are received in the aircraft, the received data are processed to generate a spatial and temporal situational model for the aircraft. At least a portion of the spatial and temporal situational model is rendered on a display device within the aircraft. Such a system and method are shown and described in United States Patent Application Serial Number 13/053,981 filed March 22, 2011, and entitled AIRCRAFT SITUATIONAL AWARENESS IMPROVEMENT SYSTEM AND METHOD, the teachings of which are hereby incorporated by reference.

Further, smart pilot **204** may comprise methods and apparatus for automatically and adaptively configuring a system for a user. User data that includes information representative of temporal and contextual user preferences, behaviors, habits, biases, idiosyncrasies, and tendencies associated with system settings and configurations are loaded into the system. The system is then configured based on the user data. User-initiated operations of the system are continuously monitored to model user performance. The user data are continuously updated based on the modeled user performance, and the system is continuously and automatically reconfigured based on the updated user data. Such a system and method are shown and described in United States Patent Application Serial Number 13/018.982 filed February 1, 2011, and entitled AUTOMATICALLY AND ADAPTIVELY CONFIGURABLE SYSTEM AND METHOD, the teachings of which are hereby incorporated by reference.

Still further, smart pilot **204** may comprise a system and method for transferring datalink-based information into an aircraft flight management system. When a datalink message is received in an aircraft, it is parsed into individual information elements. The operational impact of the received datalink message on the aircraft is determined from the individual information elements. A method of supplying pilot feedback regarding the received datalink message is determined from the determined operational impact. The pilot feedback regarding the received datalink message is supplied using the determined method. At least selected portions of the individual information elements are selectively transferred into the aircraft flight management system (FMS). Such a system and method are shown and described in United States Patent Application Serial Number 13/005,241 filed December 12, 2011, and entitled MIXED INITITIVE TRANSFER OF DATALINK-BASED INFORMATION, the teachings of which are hereby incorporated by reference.

Smart pilot **204** may still further comprise a system and method for intelligently managing an avionics display, information, and controls to more evenly distribute pilot task loads and/or automatically configure/reconfigure displays during flights. Such a system and method are shown and described in United States Patent Application Serial Number 13/206,409 filed August 9, 2011, and entitled DYNAMIC TASK AND ADAPTIVE AVIONICS DISPLAY MANAGER, the teachings of which are hereby incorporated by reference.

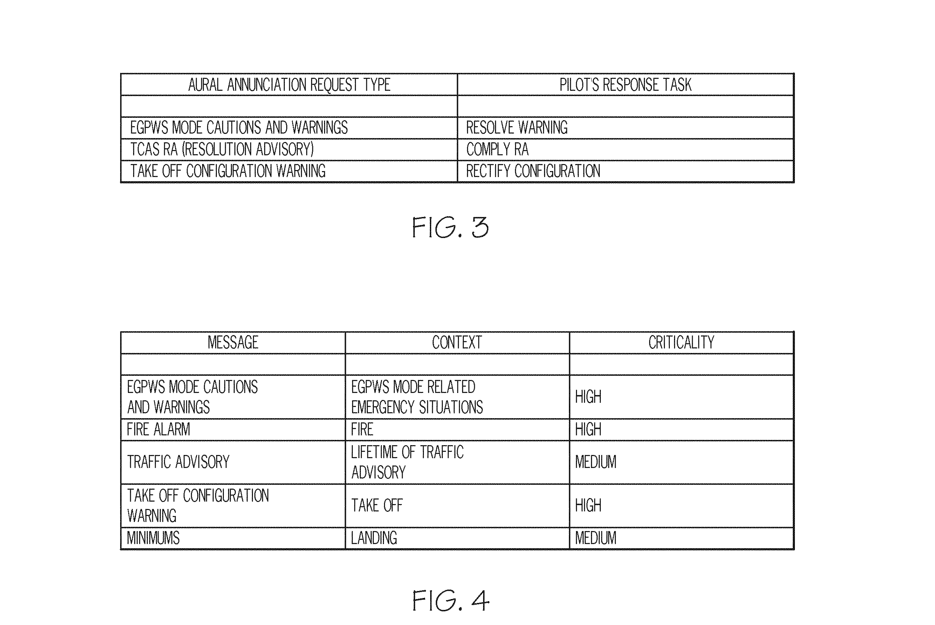

In addition to having a first input coupled to the output of speech engine **202,** a second input of smart pilot **204** is coupled to an Aural Message - Pilot Task mapping database **206** that relates active aural message requests to a pilot's likely response and corresponding task. An example of such a database is shown in FIG. 3 which illustrates three types of aural annunciation requests (i.e. EGPWS Mode Cautions and Warnings, a TCAS RA, and a Takeoff Configuration Warning) and their respective Pilot Response Tasks (i.e. respectively, Resolve Warning, Comply RA, and Rectify Configuration). Speech input is just one way that pilots would convey their task support requirements. In this context, it may receive task requests comprised long speech inputs (e.g. briefing procedures) or short speech inputs (e.g. commands comprised of a few words). Based on these requests, smart pilot **204** creates representative processes and objects of the pilot's task requests. At a third input, smart pilot receives a task-distributed, disturbance code from aural annunciation manager **208** indicating that there is a high priority aural message to be played back. Smart pilot **204** senses various flight parameters from various flight deck systems (e.g. FMS, EGPWS, GPS, COM-NAV, AFCS, etc.) at a fourth input, and context models identify the associated flight context or situation at a fifth input.

Finally, smart pilot **204** provides information relating to the active context and/or situation (i.e. the prevailing flight situation, e.g. takeoff, taxiing, emergencies such as engine or hydraulic failure by referring to context models and input avionics parameters) to a first input of aural annunciation manager (AAM). Smart pilot **204** also provides aural message requests (i.e. smart pilot communications relating to its intent and other pilot requested data over an audio channel submitted as a request to the aural annunciation manager **208** to schedule and/or decide whether or not to play back the request in accordance with the prevailing active context, associated context), the associated context (i.e. the context associated with an aural message representing the situation when the aural message request was created and not representing the active context), and global criticality (i.e. the criticality of the aural message at the flight deck level defining an order of precedence) to a second input of aural annunciation manager **208.**

Client **210,** coupled to a third input of AAM represents any system (e.g. EGPWS, FMS, etc.) that has a need to aurally annunciate a message or alert. These systems submit aural annunciation requests accompanied by a global priority or criticality to AAM **208.** Client **210** also provides active context information to the AAM that permits the AAM to manage the lifetime of the aural annunciation request. Thus, the aural message requests contain (1) the aural message to be played back, (2) the associated context or situation for which the request would be valid, and (3) the global message annunciation priority or precedence (criticality).

The AAM determines whether or not the submitted aural message request should be played immediately or scheduled for later playback because a higher priority message is currently being played. The AMM stores the submitted aural message requests and whether the associated context or situation is related to an active prevailing context. If the context associated with the submitted aural message request is still relevant to the active context, the AMM plays the message back. Otherwise, the scheduled message is deleted. In addition to receiving information from smart pilot **204** and client **210,** the AAM is also coupled to Message-Context-Criticality Mapping database **212.** The AAM manages the priority of the aural messages and the lifetime of the received aural message requests

It should be noted that playing back the request within an active context equivalent to the associated context would be more effective than playing it back when the associated context expires. That is, the lifetime of an aural message is largely context driven. A message might become invalid when the corresponding context or situation expires, and its annunciation for the pilot would not be useful to perform their active objectives and tasks. Thus, the system shown and described in FIG. 2 not only prioritizes system messages for aural annunciation, but also performs message lifetime management. It should also be noted that while databases **206** and **212** are shown as separate and distinct, they may each be contained or incorporated into a larger storage device such as memory **136** in FIG. 1.

If the pilot is conducting an active speech input task and a high criticality input task is requested, the AAM **208** notifies the smart pilot **204** that the AAM has received a higher priority message request. Referring to FIG. 4, which is an example of an Aural Message to Pilot Task database **206,** it may be inferred that the pilot would likely respond to the high priority message and would confirm this by referring to an internal context engine that maintains a normal, abnormal, and emergency situation dynamic database in, for example, database **212.** If the smart pilot **204** determines that the pilot is engaged in an active speech input task, it stores the active task context initiated by the pilot's speech input task initiated before the higher priority aural message was annunciated. Smart pilot **204** monitors the status of the current active situation that triggered the higher priority aural message (i.e. the disturbance in the process) and if expired, the pilot is reminded of the unfinished task that was interrupted by the high criticality task. The reminder could be aural and/or visual (i.e. "APROACH BRIEFING INCOMPLETE. CONTINUE?") If the pilot does not respond within a predetermined time, all task contexts (representing a pilot's interactive task corresponding to a situation) and internal software objects (task context at a system level) that would have been created from the incomplete speech input task are flushed and deleted. Alternatively, the incomplete tasks could be archived. If the pilot recalls the incomplete tasks, they can be retrieved and the task resumed. The archive could comprise a finite number of memory blocks with the oldest archived tasks being deleted as new tasks are archived.

When smart pilot **204** receives a new aural annunciation request, it submits the request to the AAM if the pilot is not conducting an active speech input task. If the pilot is engaged in an active speech input task and the new aural annunciation request is of low priority, then the request submission is deferred. When smart pilot **204** determines that the pilot is finished with the active speech input task (i.e. by checking the state of the push-to-talk switch), it checks to see if the annunciation request is still valid for the current context or situation. If not still valid, the request may be flushed or played back with an indication that it has expired.

More specifically, there are at least two scenarios. The first occurs when the pilot is engaged in an active speech input task and a high criticality message request is received. In this case, the AAM **208** notifies smart pilot **204** that it has received a higher priority message request via a task interrupt signal. Smart pilot **204** infers that the pilot would most probably respond to the higher priority message and confirms this by referring to the above described databases (e.g. FIG. 4) that maintains a normal, abnormal, and emergency situation dynamic knowledge-base. Smart pilot **204** next determines if the pilot is engaged in an active speech input task, and if so engaged, it stores the pilot's active task context initiated by the pilot's speech input task initiated before the higher priority aural message was annunciated. Smart pilot **204** monitors the status of the current active situation that triggered the higher priority aural message; i.e. the disturbance in the process, and if the triggering situation has expired, the smart pilot **204** reminds the pilot of the unfinished task disturbed by the high criticality task. This reminder may be aural and/or visual and take the form of "Approach briefing incomplete, continue?" If the pilot does not respond within a predetermined period of time, then all task contexts and internal objects related to the incomplete speech input task would be deleted. Alternatively, such incomplete tasks could be archived and retrieved when desired. This archive may comprise a finite number of memory locations and the oldest tasks deleted as new tasks are archived.

The second scenario occurs when the pilot is in an active speech input task and the smart pilot **204** detects a lower priority aural message. In this case, smart pilot generates a new aural message annunciation request and checks to determine if the pilot is engaged in an active speech input task. If not, smart pilot **204** submits the aural annunciation request to AAM **208.** If the pilot is engaged in an active speech input task and the new aural annunciation request is of a low priority, then the request submission is deferred. When the smart pilot **204** determines that the pilot has finished the active speech input task (by, for example, monitoring the push-to-talk switch), smart pilot **204** determines if the old aural annunciation request is still valid for the current context/situation. If no longer valid, the old aural annunciation request may be deleted or played back including a reference to its expired state.

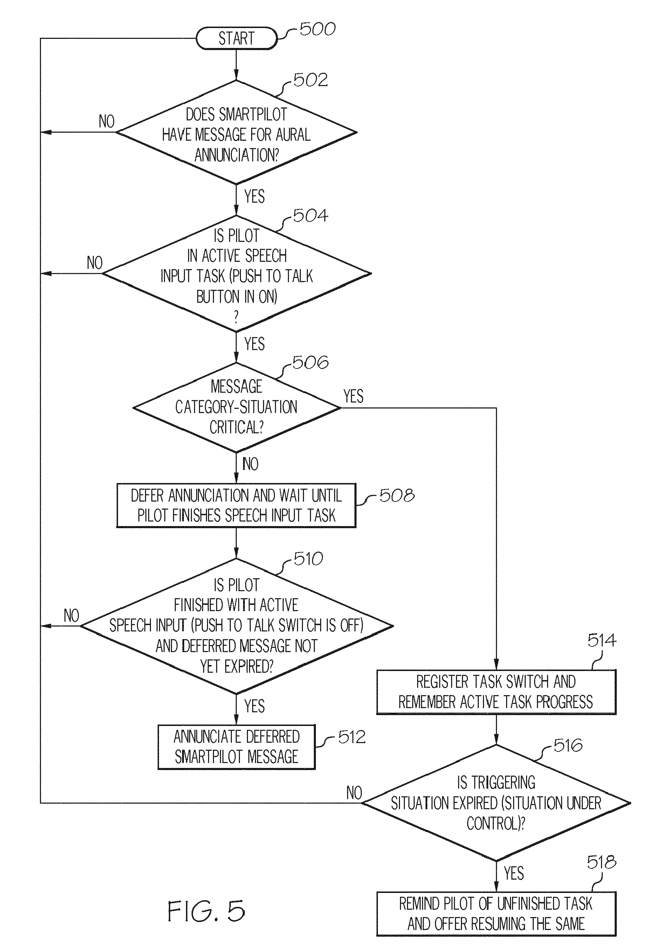

FIG. 5 is a flow chart that illustrates an exemplary embodiment of a process **500,** including both the above described scenarios, for minimizing aural noise by managing the delivery of aural messages based on message content and pilot active task profile. Although the process **500** could be performed or initiated at any time while the host aircraft is operating, the process **500** can be repeated indefinitely and at any practical rate to support continuous and dynamic updating and refreshing of the system in real-time or virtually real-time. Updating of the system enables the flight crew to obtain and respond to the current operating situation in virtually real-time.

The various tasks performed in connection with the process **500** may be performed by software, hardware, firmware, or any combination thereof. For illustrative purposes, the following description of the process **500** may refer to elements mentioned above in connection with FIG. 1. In practice, portions of the process **500** may be performed by different elements of the described system, such as the processing architecture or the display element. It should be appreciated that the process **500** may include any number of additional or alternative tasks. The tasks shown in FIG. 3 need not be performed in the illustrated order and may be incorporated into a more comprehensive procedure or process having additional functionality not described in detail herein.

In connection with the method **500,** upon commencement, there is a determination as to whether or not smart pilot **204** has a message for aural annunciation **(STEP 502).** If not, the process merely waits. When there is a message ready for oral annunciation, a determination is made as to whether or not the pilot is conducting an active an active state input task: i.e. is the push-to-talk button on **(STEP 504).** If the pilot is conducting an active speech input task, it must next be determined if the message category is critical **(STEP 506).** If it is not critical, annunciation is deferred until the pilot completes the speech input task **(STEP 508).** If the pilot completes the speech input task and the deferred message has not expired **(STEP 510),** the deferred message is annunciated, **(STEP 512).**

If in **STEP 506** it were determined that the message for aural annunciation were, in fact, situation critical, then the active task progress would be remembered **(STEP 514).** If the triggering situation is still valid, the process recycles **(STEP 516).** If not, the pilot is reminded of the unfinished task and may resume it **(STEP 518).**

Thus, there has been provided a system and method wherein the pilot and flight deck interact with each other through speech modality quite extensively. In cases where pilot is already in active speech input task, the proposed system determines if the pilot is likely to interrupt an existing speech input task and switch to a rather important task either triggered by aural warning or system signal. In this case, the proposed system stores the pilot's task context regarding the interrupted speech input and lets pilot handle more critical task. When the pilot is done with the high criticality task, the proposed system reminds pilot to resume the shelved task.

When pilot is in active speech input task, and the flight deck wants to communicate with pilot, the proposed system determines if the communication is absolute necessary for the prevailing context (this importance is relative and context dependent rather than having statically associated priorities). If found to be of lower relevance or impact on current situation, it waits for pilot to complete the speech input task, and upon completion, it asks flight deck to start communication with the pilot, since the pilot is now free to deal with the flight deck message and task actions.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A flight deck speech and aural interaction communication method, comprising:
receiving a message for aural annunciation;
determining that a pilot is engaged in an active speech input task; and
deferring annunciation if the message is not a high priority message.

2. The method of Claim 1 further comprising determining when the pilot has completed the active speech input task.

3. The method of Claim 2 further comprising annunciating the deferred message when the active speech input task is completed.

4. The method of Claim 2 further comprising determining if the aural annunciation is still valid.

5. The method of Claim 4 further comprising annunciating the deferred message if still valid.

6. The method of Claim 4 further comprising discarding the deferred message if no longer valid.

7. The method of Claim 3 further comprising:
storing the deferred message; and
retrieving the stored message when the active speech input task is completed.

8. The method of claim 7 further comprising storing the progress of the active speech input task if the message is a high priority message.

9. The method of claim 8 further comprising reminding the pilot of the stored unfinished speech input task.

10. The flight deck communication method according to claim 3 further comprising resuming the unfinished task.
